# EUROPEAN PATENT SPECIFICATION

(11) **EP 4 147 493 B1**
(45) Date of publication and mention of the grant of the patent: **26.11.2025**
(21) Application number: 21727976.9
(22) Date of filing: 05.05.2021
(51) Int. Cl.: H04W 48/18, H04W 60/00

(54) **MULTI-USIM DEVICE ACCESSING SERVICES OF A SECOND CELLULAR NETWORK THROUGH A FIRST CELLULAR NETWORK VIA A GATEWAY**
MULTI-USIM-VORRICHTUNG ZUM ZUGREIFEN AUF DIENSTE EINES ZWEITEN ZELLULAREN NETZWERKS ÜBER EIN ERSTES ZELLULARES NETZWERK ÜBER EIN GATEWAY
DISPOSITIF MULTI-USIM ACCÉDANT À DES SERVICES D'UN SECOND RÉSEAU CELLULAIRE PAR L'INTERMÉDIAIRE D'UN PREMIER RÉSEAU CELLULAIRE VIA UNE PASSERELLE

(30) Priority: 07.05.2020 US 202063021594 P
(43) Date of publication of application: 15.03.2023
(73) Proprietor: Google LLC, Mountain View, CA 94043 (US)
(72) Inventor: NUGGEHALLI, Pavan, Mountain View, CA 94043 (US); NAYAK, Shivank, Mountain View, CA 94043 (US); WANG, Jibing, Mountain View, CA 94043 (US)
(74) Representative: Marks & Clerk GST
(86) International application number: PCT/US2021/030796
(87) International publication number: WO 2021/226181

(56) References cited:
- US-A1- 2019 098 487
- LG ELECTRONICS: "Solution: MT Service notification for MUSIM UE", vol. SA WG2, no. Incheon, Korea (Republic Of); 20200113 - 20200117, 7 January 2020 (2020-01-07), XP051842707, Retrieved from the Internet <URL:https://ftp.3gpp.org/tsg_sa/WG2_Arch/TSGS2_136AH_Incheon/Docs/S2-2000650.zip S2-2000650_MUSIM_Sol_Paging Notification.docx> [retrieved on 20200107]
- VIVO: "Solution for UE initiated leave and return a network for key issue#3", vol. SA WG2, no. Incheon, Korea; 20200113 - 20200117, 7 January 2020 (2020-01-07), XP051842238, Retrieved from the Internet <URL:https://ftp.3gpp.org/tsg_sa/WG2_Arch/TSGS2_136AH_Incheon/Docs/S2-2000132.zip S2-2000132.doc> [retrieved on 20200107]
- GOOGLE: "FS_MUSIM: KI #1, New sol: ePDG connectivity for MT service in Multi-USIM scenarios", vol. SA WG2, no. Electronic Meeting; 20200601 - 20200612, 22 May 2020 (2020-05-22), XP051890237, Retrieved from the Internet <URL:https://ftp.3gpp.org/tsg_sa/WG2_Arch/TSGS2_139e_Electronic/Docs/S2-2004233.zip S2-2004233 FS_MUSIM KI1 New Solution ePDG connectivity for MT service in Multi-USIM scenarios.DOCX> [retrieved on 20200522]

## Description

### FIELD OF THE DISCLOSURE

This disclosure relates to wireless communications and, more particularly, to supporting packet-based voice and video calls through a gateway of a cellular network over certain radio access technologies.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

A user device (commonly referred to as "user equipment" or "UE") can be equipped with multiple Universal Subscriber Identity Module (USIM) cards that can access services provided by respective cellular networks, which can correspond to different public land mobile networks (PLMNs) operated by different service providers. A UE thus for example can connect to a first PLMN via one USIM, and to a second PLMN via another USIM.

The first PLMN and the second PLMN can support the same technologies (*e.g*., Evolved Packet System (EPS) or Fifth-Generation System (5GS)) or different technologies (*e.g.,* one can include an EPS and the other include a 5GS). The multi-USIM device (*e.g.*, a dual-USIM device) can have a single receiver and a single transmitter, or a dual receiver and single transmitter. That is, a single receiver allows the multi-USIM device to receive traffic from one radio access network (RAN) of a PLMN at one time, whereas dual receivers allow the multi-USIM device to receive traffic from two RANs of two corresponding PLMNs simultaneously. The single transmitter allows the multi-USIM device to transmit traffic to only one RAN at any one time.

In some scenarios, the multi-USIM device, while communicating with the first PLMN associated with a first USIM, may also communicate with a second PLMN associated with a second USIM. For example, the multi-USIM device may receive and respond to page requests or incoming calls. Although the 3rd Generation Partnership Project (3GPP) document TR 23.761 proposes certain approaches to supporting communications between a multi-USIM device and two PLMNs, these approaches require that the multi-USIM device communicate with each PLMN over the respective radio interfaces, which can generate interruptions in service and/or require additional messaging.

US2019098487A1 describes apparatus and methods to access services of multiple wireless networks by a wireless device. The wireless device attaches to a primary wireless network using a primary subscriber identity module (SIM) or electronic SIM (eSIM) via a radio access network (RAN) of the primary wireless network; establishes (i) a context for Internet Protocol (IP) network data connections using the primary SIM or eSIM and (ii) a packet data network (PDN) connection via the RAN of the primary wireless network to a gateway of a secondary wireless network using a secondary SIM or eSIM; and registers for access to services of the secondary wireless network with a server of the secondary wireless network using the secondary SIM or eSIM. The wireless device can access services of both the primary wireless network and the secondary wireless network simultaneously via the RAN of the primary wireless network.

### SUMMARY

The invention is disclosed in the appended claims.

Generally speaking, a UE registered with first and second cellular networks using corresponding USIMs implements the techniques of this disclosure to connect to a second cellular network via the radio interface of the first cellular network and a gateway via which the core network of the first cellular network can access the second cellular network, without connecting to the second cellular network over a radio interface of the second cellular network. The gateway can be for example an evolved Packet Data Gateway (ePDG). In this manner, the UE can access services of the second cellular network while communicating with only the first cellular network via the radio interface. The first cellular network can set the parameters of the connection in accordance with Quality of Service (QoS) requirements of the services which the UE accesses at the second cellular network. For example, the first cellular network in some implementations can request that the second cellular network fulfill the QoS requirements associated with the Internet Protocol (IP) Multimedia Subsystem (IMS) voice.

In some implementations, the UE can query the first cellular network to determine whether the first cellular network supports access to the gateway of the second cellular network. The UE similarly can query the second cellular network to determine whether the second cellular network supports access to the gateway of the first cellular network. When both cellular networks support access to the corresponding gateways, the UE can choose the type of connection (*e.g*., the RAN of the first cellular network to the gateway of the second cellular network, or the RAN of the second first cellular network to the gateway of the first cellular network) based on one or more suitable criteria such as signal strength and/or quality for example.

The first and second cellular networks in some scenarios can be associated with different operators and different PLMNs. A cellular network with access to one or more ePDGs in various scenarios can indicate to the UE whether the cellular network supports ePDGs access to the same PLMN only, equivalent PLMNs only, a certain limited set of PLMNs, or all PLMNs.

After the UE selects the first cellular network that supports access to the gateway of the second cellular network, the UE can stop communicating with the second cellular network over the radio interface of the second cellular network. In particular, the UE need not monitor downlink transmissions from the second cellular network or attempt uplink transmissions to the second cellular network. In some cases, to prevent the second cellular network from unnecessarily expending resources to page the UE over the radio interface, for example, the UE can deregister (or detach) from the second cellular network, or activate Mobile Initiated Connection Only (MICO) mode, so that the core network does not page the UE.

One example implementation of these techniques is a according to claim 1. Another example implementation of these techniques is a UE with processing hardware configured to implement this method.

Another example implementation of these techniques is a method according to claim 13. Another example implementation of these techniques is a cellular network with processing hardware configured to implement this method.

### BRIEF DESCRIPTION OF THE DRAWINGS

Fig. 1 is a block diagram of an example wireless communication network in which a user device (UE) connected to a PLMN can support an IP Multimedia Subsystem (IMS) call originated or terminated at the UE via an ePDG of another PLMN;
Fig. 2 illustrates example processing hardware of the UE of Fig. 1;
Fig. 3A is a messaging diagram of an example scenario in which a 5GS provides the UE of Fig. 1 a connection to another 5GS for accessing its services;
Fig. 3B is a messaging diagram of an example scenario in which an EPS provides the UE of Fig. 1 a connection to another EPS for accessing its services;
Fig. 4 is a flow diagram depicting an example method in the UE of Fig. 1 for connecting to a cellular network via its gateway and a RAN of another cellular network; and
Fig. 5 is a flow diagram depicting an example method in a cellular network for providing communication to the UE of Fig. 1.

### DETAILED DESCRIPTION OF THE DRAWINGS

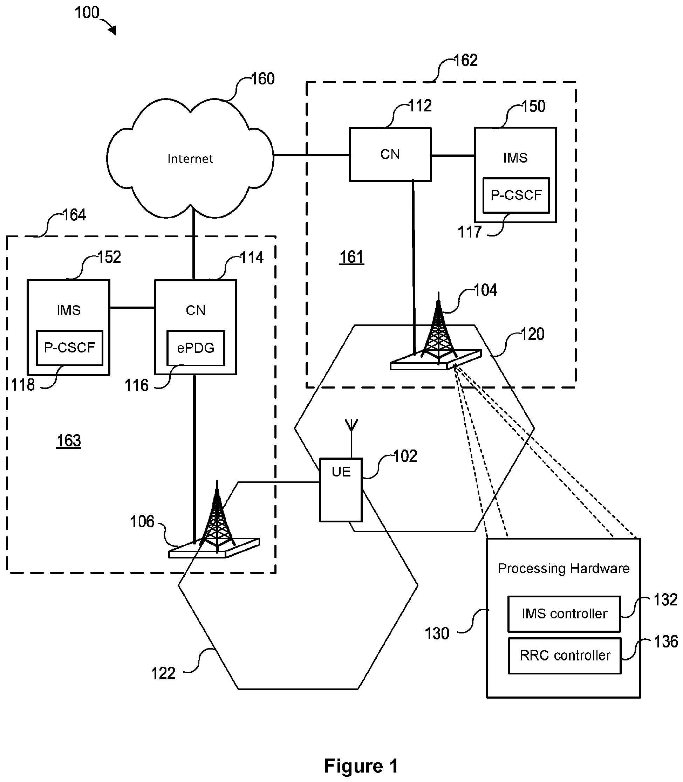

Fig. 1 depicts an example wireless communication network 100 in which a user device in various scenarios can be configured to support packet-based audio and video calls over certain RATs and core networks (CNs).

The examples below refer primarily to IMS video calls or IMS voice calls performed over NR or EUTRA RATs, with the corresponding base stations connected to 5GC or EPC core networks. In general, however, the techniques of this disclosure also can apply to other types of IP services, such as non-voice services (*e.g*., short message service (SMS)), other RATs, and other core networks.

Referring to Fig. 1, the UE 102 can be any suitable device capable of wireless communications (as further discussed below). In general, the wireless communication network 100 can include any number of base stations, and each of the base stations can cover one, two, three, or any other suitable number of cells. As illustrated, the wireless communication network 100 includes a base station 104 connected to a first core network (CN) 112, and a base station 106 connected to a second CN 114. The base station 104 and the first CN 112, or collectively referred to as a first cellular network 162, can be associated to a PLMN, *e.g.,* PLMN 161, and similarly, the base station 106 and the second CN 114, or collectively referred to as a second cellular network 164, can be associated to a second PLMN, *e.g.,* PLMN 163. Each of the PLMN 161 and the PLMN 163 may be an EPS or a 5GS. As such, each of the first CN 112 and the second CN 114 can be an evolved packet core (EPC) or a fifth-generation core (5GC). PLMNs 161 and 163 can be the same PLMNs, equivalent PLMNs (E-PLMNs), or different PLMNs.

Further, each of the base station 104 and base station 106 can operate as a EUTRA base station (*e.g*., an evolved Node B (eNB)) in implementations where the corresponding CN is an EPC or, in those implementations where the corresponding CN is a 5GC, as a next-generation eNB (ng-eNB) or a next-generation Node B (gNB). The base station 104 covers a cell 120, and the base station 106 covers a cell 122. The UE 102 can support EUTRA and 5G NR (or simply, "NR") air interfaces to exchange messages with each of the base stations 104 and 106, accordingly.

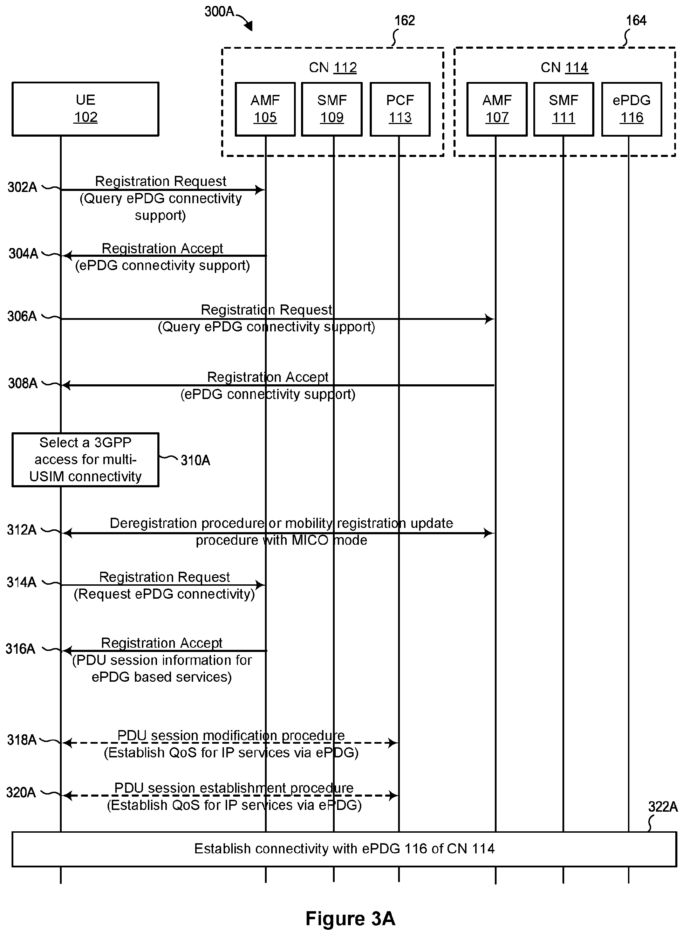

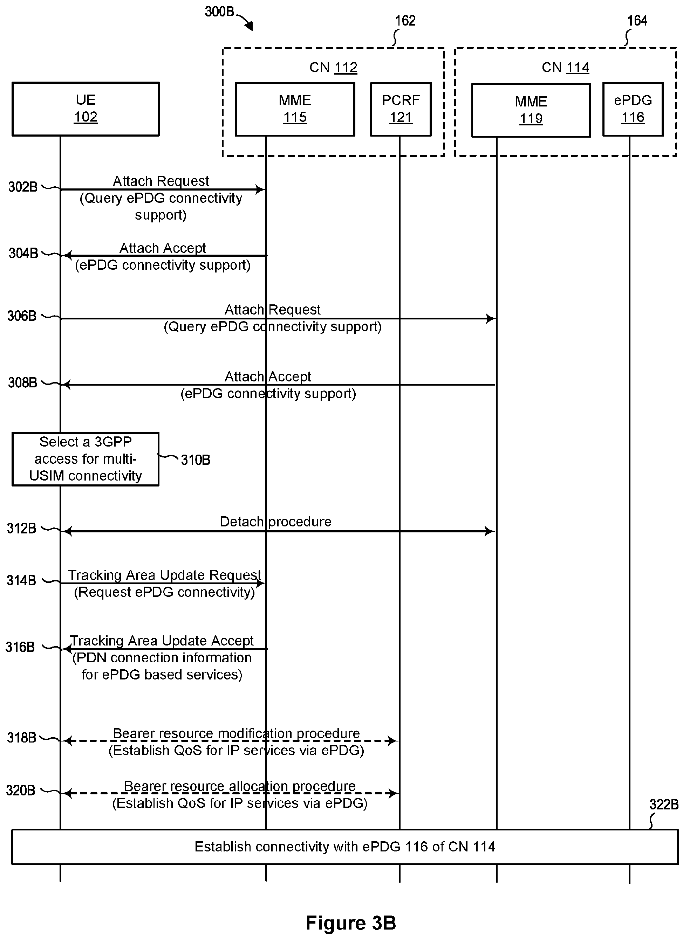

Among other components, the EPC can include a Serving Gateway (S-GW), a Mobility Management Entity (MME), and a Policy and Charging Rules Function (PCRF). The S-GW is generally configured to transfer user-plane packets related to audio calls, video calls, Internet traffic, etc., the MME is configured to manage authentication, registration, paging, and other related functions, and the PCRF supports service data flow detection, policy enforcement, and flow-based charging. The 5GC can include a User Plane Function (UPF), an Access and Mobility Management (AMF), a Session Management Function (SMF), and/or Policy Control Function (PCF). The UPF is generally configured to transfer user-plane packets related to audio calls, video calls, Internet traffic, etc., the AMF is configured to manage authentication, registration, paging, and other related functions, the SMF is configured to manage protocol data unit (PDU) sessions, and the PCF is configured to provide policies for mobility and session management. The AMF, SMF, and PCF, although not shown in Fig. 1 to avoid clutter, will be shown in Figs. 3A and 3B.

In some implementations, in contrast to "3GPP access" technologies (*e.g*., base stations 104, 106) for interconnecting the UE 102 to the first CN 112 and/or the second CN 114, the EPS and 5GS may allow "non-3GPP access" technologies (*e.g*., WiMAX, WLAN) to interconnect the UE 102 and the EPC and 5GC, respectively. Non-3GPP access technologies can be split into two categories: the so-called "trusted" non-3GPP access and the "untrusted" non-3GPP access. Trusted non-3GPP access can interact directly with the CN, while untrusted non-3GPP access interact with the CN via a gateway, such as the ePDG. As such, in some implementations, the first CN 112 and/or the second CN 114 may include an ePDG, one of which is illustrated in Fig. 1 as ePDG 116 included in the second CN 114.

In some implementations, the first CN 112 and the second CN 114 can be connected to an IMS 150 and IMS 152, respectively. The IMS 150 may belong to the first cellular network 162, and IMS 152 may belong to the second cellular network 164. Depending on the implementation, the IMS 150 and the IMS 152 may be the same IMS or different instances of an IMS, and can support the Session Initiation Protocol (SIP) and the Internet Protocol (IP). In any case, the IMS 150 includes a Proxy Call Session Control Function (P-CSCF) module 117, and the IMS 152 includes a P-CSCF module 118. UEs such as the UE 102 can exchange messages with the P-CSCF module 117 or 118 during a registration procedure with the IMS. In addition to a P-CSCF module, the IMS 150 or 152 can include an Interrogating CSCF (I-CSCF) server, a Home Subscriber (HSS) server, and a Serving CSCF (C-CSCF) module (none shown to avoid clutter).

Each of the first CN 112 and the second CN 114 can also be connected to the Internet 160 (*e.g.,* via an Internet access point name (APN)). In one implementation, the UE 102 can first connect to the first cellular network 162 via 3GPP access (*e.g*., via the base station 104), and register with the IMS 150 for IMS services of the first cellular network 162, *e.g.,* using an IMS APN. The UE 102 can then establish a context (*e.g.,* a packet data protocol (PDP) context) for connections via the base station 104 to connect to the Internet 160, *e.g.,* via an Internet APN. Through a tunneled connection (*e.g.,* a data connection) over the Internet 160 that traverses the base station 104 and the first CN 112, the UE 102 can connect to IMS 152 via ePDG 116 in the second CN 114. The UE 102 can register for access to IMS services of the second CN 114 and need not connect to the second cellular network 164 via 3GPP access (*e.g*., via the base station 106). That is, the UE 102 can connect to the IMS 152 of the second cellular network 164 bypassing its 3GPP access. The UE 102 can originate voice connections or text messaging and/or receive voice connections or text messaging using IMS services of the second cellular network 164 through the connection established with the first cellular network 162 via the base station 104. With the UE 102 registered or otherwise attached to both the first cellular network 162 and the second cellular network 164 (via a connection through the first cellular network 162), the UE 102 can access IMS services of both the first cellular network 162 and the second cellular network 164 simultaneously.

With continued reference to Fig. 1, the base station 104 is equipped with processing hardware 130 that can include one or more general-purpose processors (*e.g*., CPUs) and a non-transitory computer-readable memory storing instructions that the one or more general-purpose processors execute. Additionally or alternatively, the processing hardware 130 can include special-purpose processing units. The processing hardware in an example implementation includes an IMS controller 132 configured to support IMS calls of certain types and for certain RATs/CN types with user devices operating in the cell 120, including the UE 102, and a radio resource control (RRC) controller 136 to implement procedures and messaging at the RRC sublayer of the protocol communication stack.

The base station 106 may include generally similar components with the IMS controller of the base station 106 configured to support IMS calls with user devices operating in the cell 122.

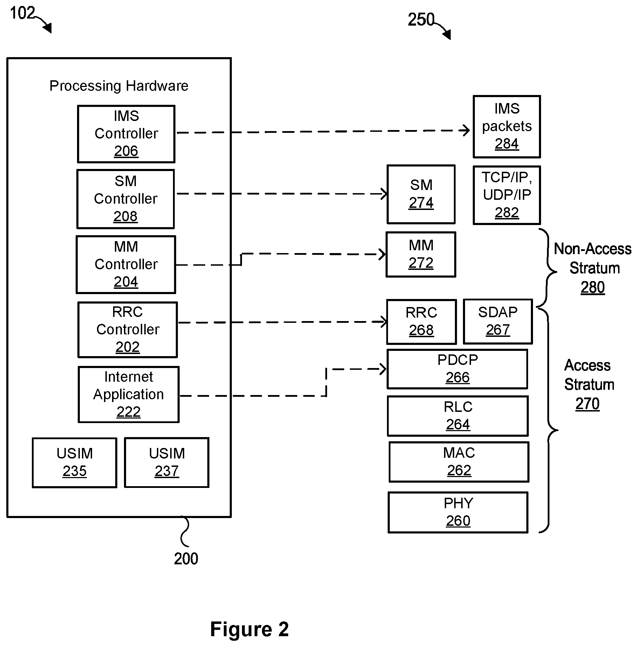

Next, Fig. 2 depicts various components of the UE 102. In particular, the UE 102 can be equipped with processing hardware 200 including one or more general-purpose processors (*e.g*., CPUs) and a non-transitory computer-readable memory storing instructions that the one or more general-purpose processors execute. Additionally or alternatively, the processing hardware 200 can include special-purpose processing units.

The processing hardware 200 includes USIM 235 and USIM 237. As used herein, the term "USIM" can refer to a universal subscriber identity module (USIM), a SIM, an electronic SIM (eSIM), a universal integrated circuit card (UICC), an embedded UICC (eUICC), or other suitable removable or embedded smart card, which includes any software, hardware, firmware, or combination thereof, to access services associated with a PLMN. For example, the USIM 235 and the USIM 237 can be used by the UE 102 to communicate with the first cellular network 162 and the second cellular network 164, respectively. The processing hardware 200 also includes an RRC controller 202, a mobility management (MM) controller 204, an IMS controller 206, and a Session Management (SM) controller 208. Each of the controllers 202, 204, 206, and 208 is responsible for inbound messaging, outbound messaging, and internal procedures at the corresponding layer of a protocol stack 250. In addition to supporting messaging external to the UE 102, the controllers 202, 204, 206, and 208 can exchange internal messages with each other as well as with other components of the UE 102, such as an Internet application 222, for example. Each of the controllers 202, 204, 206, and 208 can be implemented using any suitable combination of hardware, software, and firmware. In one example implementation, the controllers 202, 204, 206, and 208 are sets of instructions that define respective components of the operating system of the UE 102, and one or more CPUs execute these instructions to perform the corresponding functions. In another implementation, some or all of the controllers 202, 204, 206, and 208 are implemented using firmware as a part of a wireless communication chipset.

The protocol stack 250 includes a physical layer 260 (commonly abbreviated as PHY), a medium access control (MAC) layer 262, a radio link control (RLC) layer 264, a packet data convergence protocol (PDCP) sublayer 266, a service data adaption protocol (SDAP) sublayer 267, and the RRC sublayer 268 as part of the access stratum 270. These layers are ordered as illustrated in Fig. 2. The non-access stratum (NAS) 280 of the protocol stack 250 includes, among other sub-layers, an MM sublayer 272 for exchanging messages related to registration/attachment and location updates, for example, and an SM sublayer 274 for exchanging messages related to PDU session establishment, PDU session modification, PDU session authentication, and PDU session release, for example. The MM sublayer 272 can correspond to an Evolved MM (EMM) sublayer for EPS NAS procedures and a 5G MM (5GMM) sublayer for 5GS NAS procedures. The protocol stack 250 also can support higher-layer protocols for various services and applications, including for example TCP/IP and UDP/IP layer 282 and a set 284 of protocols for packet-based voice and/or packet-based video. The controllers 202, 204, 206, 208 generate outbound messages and process inbound messages corresponding to the layers or sublayers 268, 272, 284, 274, respectively, as schematically illustrated in Fig. 2. The controllers 202, 204, 206, 208 also carry out procedures internal to the UE 102.

Next, example scenarios that involve several components of Fig. 1 and related to IMS calls (*e.g.,* IMS voice calls, IMS video calls) are discussed next with reference to Figs. 3A-3B. The IMS call can be a mobile-originated (MO) call or a mobile-terminated (MT) call. Generally, UE 102 can connect to a first CN (*e.g.,* first CN 112) and establish connectivity to an IMS (*e.g.,* IMS 152) of a second CN (*e.g.,* second CN 114) via an ePDG (*e.g.,* ePDG 116) of the second CN. The UE 102, the base station 104, and the CNs 112, 114 can implement at least some of the steps of these scenarios in software, firmware, hardware, or any suitable combination of software, firmware, and hardware. Although Figs. 3A-3B are discussed below with reference to these components depicted in Fig. 1, in general any suitable user device or groups of devices can implement these methods and scenarios.

Referring to Fig. 3A, in a scenario 300A, the first CN 112 and the second CN 114, which belong to the first cellular network 162 and the second cellular network 164, respectively, are both 5GC. The first cellular network 162 can be associated to PLMN 161, and the second cellular network 164 can be associated to PLMN 163. The UE 102 initially has not yet registered with either of the first cellular network 162 or the second cellular network 164, and is generally unaware whether the first cellular network 162 supports ePDG connectivity (*e.g*., whether the first cellular network 162 supports connectivity to the ePDG of the second cellular network 164). Similarly, the UE 102 is unaware whether the second cellular network 164 supports ePDG connectivity (*e.g*., whether the second cellular network 164 supports connectivity to the ePDG of the first cellular network 162). For instance, unknown to the UE 102, PLMN 161 and PLMN 163 may have a roaming arrangement in which the second cellular network 164 allows user devices, such as UE 102, to access its IP services (*e.g.,* IMS 152) via an ePDG (*e.g.,* ePDG 116) of the second cellular network 164 through a connection that traverses the first cellular network 162.

To determine whether the first cellular network 162 supports ePDG connectivity, the UE 102 can query the first cellular network 162 by sending 302A a request (*e.g.,* a mobility management request message) to the first CN 112 (*e.g.,* AMF 105) via base station 104 to query whether the first cellular network 162 supports ePDG connectivity. In response, the first cellular network 162, by way of the first CN 112 (*e.g.,* AMF 105), sends 304A a response (*e.g.,* a mobility management response message) to the UE 102 via base station 104 that includes an indication that specifies whether the first cellular network 162 supports ePDG connectivity. The indication can specify that the first cellular network 162 supports an ePDG that belongs to or is otherwise associated with one or more PLMNs that the first cellular network 162 can access via a respective gateway. For example, if the indication specifies the same PLMN as the first cellular network 162 (*e.g.,* PLMN 161), and PLMN 161 and PLMN 163 are the same PLMNs, the UE 102 can determine that the first cellular network 162 supports an ePDG that belongs to the second cellular network 164 associated with PLMN 163. As another example, if the indication specifies a listing of equivalent PLMNs (E-PLMNs), or all PLMNs that the first cellular network 162 can access, and PLMN 163 is included in either listing, the UE 102 can determine that the first cellular network 162 supports an ePDG that belongs to the second cellular network 164 associated with PLMN 163. Similarly, to determine whether the second cellular network 164 supports ePDG connectivity, the UE 102 can query the second cellular network 164 by sending 306A a request (*e.g.,* a mobility management request message) to the second CN 114 (*e.g.,* AMF 107) via base station 106 to query whether the second cellular network 164 supports ePDG connectivity. In response, the second cellular network 164, by way of the second CN 114 (*e.g.,* AMF 107), sends 308A a response (*e.g.,* a mobility management response message) to the UE 102 via base station 106 that includes an indication that specifies whether the second cellular network 164 supports ePDG connectivity. The mobility management request message and the mobility management response message discussed above, which can be exchanged at the MM sublayer 272, can be a Registration Request message and a Registration Accept message pursuant to the 5GS NAS Registration procedure specified in 3GPP TS 24.501, for example, with new indications for designating the ePDG connectivity support query and ePDG connectivity support response.

In other implementations, rather than utilizing the 5GS NAS Registration procedure, each of the base stations 104, 106 of the respective first cellular network 162 and the second cellular network 164 can provide, to the UE 102, an indication of whether ePDG connectivity is supported. The indication can be broadcasted in a system information block (SIB) to the UE 102 at the RRC sublayer 268, in the corresponding cells 120, 122, for example.

After receiving indication(s) from the first cellular network 162 and/or the second cellular network 164 that specify whether the first cellular network 162 and/or the second cellular network 164 supports ePDG connectivity, the UE 102 can determine 310A to which CN to connect via 3GPP access, and select the CN that supports ePDG connectivity, *e.g*., as determined from the Registration Accept message or the SIB. For example, if the UE 102 becomes aware that the first CN 112 can reach the second CN 114 via ePDG 116 of the second CN 114, but the second CN 114 cannot reach the first CN 112 via ePDG of the first CN 112, the UE 102 selects 310A 3GPP access of the first cellular network 162 for multi-USIM connectivity, that is, to connect to the first cellular network 162 and to the second cellular network 164 via ePDG 116. If the first CN 112 and the second CN 114 support cross-connectivity via ePDG (*i.e.*, the first CN 112 can reach the second CN 114 via ePDG 116 of the second CN 114, and the second CN 114 can reach the first CN 112 via ePDG of the first CN 112), the UE 102 can select one of the first CN 112 or the second CN 114 based on one or more criteria, which may include a preference of the UE 102, or a suitable wireless connectivity parameter. For example, the UE 102 can perform measurements to obtain a signal strength parameter (*e.g*., Reference Signal Received Power (RSRP), Reference Signal Received Quality (RSRQ)) between the UE 102 and each of the base stations 104, 106, and select the CN corresponding to the base station that exhibits a higher RSRP or RSRQ.

After the UE 102 selects one of the CNs (*e.g.,* the first CN 112) to connect via its corresponding 3GPP access, the UE 102 need not monitor the non-selected CN (*e.g.,* the second CN 114) via its corresponding 3GPP access. That is, the UE 102 need not monitor downlink transmissions from the second cellular network 164 or attempt uplink transmissions to the second cellular network 164. To prevent the second cellular network 164 from unnecessarily expending resources to page the UE 102 via its corresponding 3GPP access, or otherwise incorrectly determining that the UE 102 is unreachable, the UE 102 deregisters 312A from the second cellular network 164 so that the second CN 114 of the second cellular network 164 does not page the UE 102. In some implementations, the UE 102 can deregister from the second cellular network 164 by performing a Deregistration procedure pursuant to 3GPP TS 23.502 with the second CN 114 (*e.g.,* AMF 107) via the base station 106. Alternatively, the UE 102 can activate Mobile Initiated Connection Only (MICO) mode using a Mobility Registration Update procedure pursuant to 3GPP TS 24.501 with respect to the second cellular network 164. More generally, either procedure can include any suitable messaging and processing at the UE 102 and/or the second cellular network 164 that causes the UE 102 to prevent the second cellular network 164 from transmitting information (*e.g*., paging messages) to the UE 102 via its RAN (*e.g.,* base station 106). In some implementations, in either procedure, the UE 102 can provide a new information element (IE) or suitable indicator to the second cellular network 164, indicating that the UE 102 prefers to connect to the second cellular network 164 via ePDG 116.

After the UE 102 selects one of the CNs (*e.g.,* the first CN 112), the UE 102 connects to the first CN 112 of the first cellular network 162 via 3GPP access. For example, the MM controller 204 or another suitable entity in the UE 102 can perform the Mobility Registration Update procedure pursuant to 3GPP TS 24.501 to connect to the first cellular network 162. In the example configuration of Figs. 1 and 2, the MM controller 204 of the UE 102 can transmit 314A a request to the first CN 112 (*e.g.,* AMF 105) via the cell 120. The request can be associated with mobility management at a NAS layer 280, and more particularly, the MM sublayer 272, such as the Registration Request message as discussed above. In some implementations, the UE 102 can include an indication in the request at event 314A when performing the Mobility Registration Update procedure to specify that the UE 102 intends to initially connect to the first CN 112 of the first cellular network 162 via 3GPP access to reach the ePDG 116 of the second cellular network 164. In this way, the first cellular network 162 can be put on notice that the UE 102 is requesting to use its RAN and core network resources to connect to the second cellular network 164, and exercise control over granting whether the UE 102 successfully connects to the ePDG 116. If the first cellular network 162 grants such ePDG connectivity, the UE 102 subsequently connects to the second cellular network 164 (via the ePDG 116 of the second CN 114) through a connection that traverses the first cellular network 162 to access IP services offered by the second CN 114.

In some implementations, the UE 102 can optionally provide to the first CN 112 (*e.g.,* SMF 109, PCF 113) QoS requirements of the IP services intended to be established with the ePDG 116. For example, to convey the needs of the requested IP service, the UE 102 can include a QoS profile (*e.g*., standardized 5G QoS Identifier (5QI) value(s) or QoS Class Identifiers (QCI) value(s) because different types of user plane payload may correspond to different values) of the intended IP service(s), or an identification of the intended IP service(s) in the request at event 314A, or otherwise provide such QoS requirements during the Mobility Registration Update Procedure discussed above.

In response to receiving the request, the first CN 112 (*e.g.,* AMF 105) transmits 316A a response (*e.g*., Registration Accept message) to the MM controller 204 of the UE 102 via the cell 120. The response can include information to instruct the UE 102 to either establish a new PDU session associated with a protocol for exchanging data packets between the UE 102 and the second cellular network 164 via the ePDG 116, or to use an existing PDU session associated with a protocol for exchanging data packets between the UE 102 and the second cellular network 164 via the ePDG 116. For example, if the first CN 112 determines that an existing PDU session between the second cellular network 164 and the UE 102 is sufficient to handle the QoS requirements of the IP services requested by the UE 102, the first CN 112 may include an indication in the Registration Accept message to instruct the UE 102 to reuse the existing PDU session. Otherwise, the first CN 112 may include an indication in the Registration Accept message to instruct the UE 102 to request a new PDU session, or to modify the existing PDU session.

In some implementations, if the UE 102 provides the first CN 112 with QoS requirements of the IP services intended to be established with the ePDG 116 discussed above, either the UE 102 or the first cellular network 162 can initiate a PDU session (either a modified existing PDU session or a new PDU session) with parameters that satisfy the QoS requirements. In this way, the quality of the connection that traverses the first cellular network 162 and the second cellular network 164 via the ePDG 116 is bolstered in accordance with the QoS requirements, so that IP services, such as IMS voice that typically has stringent QoS requirements, is properly supported over the connection. In some implementations, the first cellular network 162 can initiate the PDU session with QoS requirements based on a service level agreement (SLA) between the PLMN 161 and the PLMN 163, which may be the same or differ from the QoS requirements of the IP services intended to be accessed by the UE 102.

To modify an existing PDU session between the UE 102 and the second cellular network 164 via the ePDG 116, the UE 102 (*e.g.,* SM controller 208) or the first CN 112 (*e.g.,* SMF 109, PCF 113) can initiate 318A a PDU session modification procedure pursuant to 3GPP TS 23.502 to support the IP services to be delivered via ePDG 116. To established a new PDU session, the UE 102 (*e.g.,* SM controller 208) can initiate 320A a PDU session establishment procedure pursuant to 3GPP TS 23.502 to establish a new PDU session with the first CN 112 (*e.g.,* SMF 109, PCF 113). In some implementations, in either of these procedures, the UE 102 (*e.g.,* SM controller 208) can transmit a PDU session request message (*e.g*., PDU Session Modification Request message, PDU Session Establishment Request message) to the first CN 112, which in turn modifies or otherwise establishes resources requested by the UE 102. More generally, either procedure can include any suitable messaging and processing at the UE 102 and/or the first CN 112 that causes the first CN 112 to establish a PDU session over ePDG 116 that satisfies QoS requirements for IP services accessible by the UE 102. The base station 104 then can transmit an RRC Configuration message configuring a data radio bearer (DRB) for the PDU session to the UE 102.

After successfully performing the PDU session establishment procedure and/or PDU session modification procedure, the UE 102 establishes 322A connectivity with the ePDG 116 of the second CN 114 via 3GPP access of the first CN 112. As a result, the base station 104 can generate a DRB configuration configuring DRB(s) and configure radio resources so that the UE 102 can transmit and receive packets of an IMS call (*e.g.,* via Internet application 222). After configuring the radio resources, the UE 102 (*e.g.,* IMS controller 206) can transmit IMS signaling messages (*e.g*., SIP messages) with the IMS 152 (*e.g.,* P-CSCF 118) via the second CN 114 using the established PDU session, and receive the SIP "200 OK" message from the IMS 152 in response, thereby establishing an IMS call via the base station 104.

Referring to Fig. 3B, in a scenario 300B, the first CN 112 and the second CN 114, which belong to the first cellular network 162 and the second cellular network 164, respectively, are both EPC. Like in scenario 300A, the first cellular network 162 can be associated to PLMN 161, and the second cellular network 164 can be associated to PLMN 163. The UE 102 initially has not yet attached with either of the first cellular network 162 or the second cellular network 164, and is generally unaware whether either of the first cellular network 162 or the second cellular network 164 supports ePDG connectivity, similar to the scenario 300A. For instance, unknown to the UE 102, PLMN 161 and PLMN 163 may have a roaming arrangement in which the second cellular network 164 allows user devices, such as UE 102, to access its IP services (*e.g.,* IMS 152) via an ePDG (*e.g.,* ePDG 116) of the second cellular network 164 through a connection that traverses the first cellular network 162.

To determine whether the first cellular network 162 supports ePDG connectivity, the UE 102 can query the first cellular network 162 by sending 302B a request (*e.g.,* a mobility management request message) to the first CN 112 (*e.g.,* MME 115) via base station 104 to query whether the first cellular network 162 supports ePDG connectivity. In response, the first cellular network 162, by way of the first CN 112 (*e.g.,* MME 115), sends 304B a response (*e.g.,* a mobility management response message) to the UE 102 via base station 104 that includes an indication that specifies whether the first cellular network 162 supports ePDG connectivity. The indication can be similar to the indication described above in scenario 300A. Similarly, to determine whether the second cellular network 164 supports ePDG connectivity, the UE 102 can query the second cellular network 164 by sending 306B a request (*e.g.,* a mobility management request message) to the second CN 114 (*e.g.,* MME 119) via base station 106 to query whether the second cellular network 164 supports ePDG connectivity. In response, the second cellular network 164, by way of the second CN 114 (*e.g.,* MME 119), sends 308B a response (*e.g.,* a mobility management response message) to the UE 102 via base station 106 that includes an indication that specifies whether the second cellular network 164 supports ePDG connectivity. The mobility management request message and the mobility management response message discussed above, which can be exchanged at the MM sublayer 272, can be an Attach Request message and an Attach Accept message pursuant to the Attach procedure specified in 3GPP TS 24.301, for example, with new indications for designating the ePDG connectivity support query and ePDG connectivity support response.

In other implementations, rather than utilizing the Attach procedure, each of the base stations 104, 106 of the respective first cellular network 162 and the second cellular network 164 can provide, to the UE 102, an indication of whether ePDG connectivity is supported. The indication can be broadcasted in a SIB to the UE 102 at the RRC sublayer 268, in the corresponding cells 120, 122, for example.

After receiving indication(s) from the first cellular network 162 and/or the second cellular network 164 that specify whether the first cellular network 162 and/or the second cellular network 164 supports ePDG connectivity, the UE 102 can determine 310B to which CN to connect via 3GPP access, and select the CN that supports ePDG connectivity, *e.g*., as determined from the Attach Accept message or the SIB. For example, if the UE 102 becomes aware that the first CN 112 can reach the second CN 114 via ePDG 116 of the second CN 114, but the second CN 114 cannot reach the first CN 112 via ePDG of the first CN 112, the UE 102 selects 310B 3GPP access of the first cellular network 162 for multi-USIM connectivity, that is, to connect to the first cellular network 162 and to the second cellular network 164 via ePDG 116. If the first CN 112 and the second CN 114 support cross-connectivity via ePDG (*i.e.*, the first CN 112 can reach the second CN 114 via ePDG 116 of the second CN 114, and the second CN 114 can reach the first CN 112 via ePDG of the first CN 112), the UE 102 can select one of the first CN 112 or the second CN 114 based on one or more criteria, which may include a preference of the UE 102, or a suitable wireless connectivity parameter described above with respect to scenario 300A.

After the UE 102 selects one of the CNs (*e.g.,* the first CN 112) to connect via its corresponding 3GPP access, the UE 102 need not monitor the non-selected CN (*e.g.,* the second CN 114) via its corresponding 3GPP access. To prevent the second cellular network 164 from unnecessarily expending resources to page the UE 102 via its corresponding 3GPP access, or otherwise incorrectly determining that the UE 102 is unreachable, the UE 102 deregisters 312B from the second cellular network 164 so that the second CN 114 of the second cellular network 164 does not page the UE 102. In some implementations, the UE 102 can deregister from the second cellular network 164 by performing a Detach procedure pursuant to 3GPP TS 24.301 with the second CN 114 (*e.g.,* MME 119) via the base station 106. More generally, this procedure can include any suitable messaging and processing at the UE 102 and/or the second cellular network 164 that causes the UE 102 to prevent the second cellular network 164 from transmitting information (*e.g*., paging messages) to the UE 102 via its RAN (*e.g.,* base station 106). In some implementations, in this procedure, the UE 102 can provide a new IE or suitable indicator to the second cellular network 164, indicating that the UE 102 prefers to connect to the second cellular network 164 via ePDG 116.

After the UE 102 selects one of the CNs (*e.g.,* the first CN 112), the UE 102 connects to the first CN 112 of the first cellular network 162 via 3GPP access. For example, the MM controller 204 or another suitable entity in the UE 102 can perform a Tracking Area Update procedure pursuant to 3GPP TS 24.301, or alternatively, the Attach procedure described above to connect to the first cellular network 162. In the example configuration of Figs. 1 and 2, the MM controller 204 of the UE 102 can transmit 314B a request to the first CN 112 (*e.g.,* MME 115) via the cell 120. The request can be associated with mobility management at a NAS layer 280, and more particularly, the MM sublayer 272, such as the Tracking Area Update Request message. In some implementations, the UE 102 can include an indication in the request at event 314B to specify that the UE 102 intends to initially connect to the first CN 112 of the first cellular network 162 via 3GPP access to reach the ePDG 116 of the second cellular network 164. In this way, the first cellular network 162 can be put on notice that the UE 102 is requesting to use its RAN and core network resources to connect to the second cellular network 164, and exercise control over granting whether the UE 102 can connect to the ePDG 116. If the first cellular network 162 grants such ePDG connectivity, the UE 102 subsequently connects to the second cellular network 164 (via the ePDG 116 of the second CN 114) through a connection that traverses the first cellular network 162 to access IP services offered by the second CN 114.

In some implementations, the UE 102 can optionally provide to the first CN 112 (*e.g.,* MME 115, PCRF 121) QoS requirements of the IP services intended to be established with the ePDG 116. For example, the UE 102 can include a QoS profile (*e.g*., standardized 5QI value(s) or QCI value(s)) of the intended IP service(s), or an identification of the intended IP service(s) in the request at event 314B.

In response to receiving the request, the first CN 112 (*e.g.,* MME 115) transmits 316B a response (*e.g*., Tracking Area Update Accept message) to the MM controller 204 of the UE 102 via the cell 120. The response can include information to instruct the UE 102 to either establish a new packet data network (PDN) connection associated with a protocol for exchanging data packets between the UE 102 and the second cellular network 164 via the ePDG 116, or to use an existing PDN connection associated with a protocol for exchanging data packets between the UE 102 and the second cellular network 164 via the ePDG 116. For example, if the first CN 112 determines that an existing PDN connection between the second cellular network 164 and the UE 102 is sufficient to handle the QoS requirements of the IP services requested by the UE 102, the first CN 112 may include an indication in the Tracking Area Update Accept message to instruct the UE 102 to reuse the existing PDN connection. Otherwise, the first CN 112 may include an indication in the Tracking Area Update Accept message to instruct the UE 102 to request a new PDN connection, or to modify the existing PDN connection.

In some implementations, if the UE 102 provides the first CN 112 with QoS requirements of the IP services intended to be established with the ePDG 116 discussed above, either the UE 102 or the first cellular network 162 can initiate a PDN connection (either a modified existing PDN connection or a new PDN connection) with parameters that satisfy the QoS requirements. In this way, the quality of the connection that traverses the first cellular network 162 and the second cellular network 164 via the ePDG 116 is bolstered in accordance with the QoS requirements, so that IP services, such as IMS voice that typically has stringent QoS requirements, is properly supported over the connection. In some implementations, the first cellular network 162 can initiate the PDN connection with QoS requirements based on an SLA between the PLMN 161 and the PLMN 163, which may be the same or differ from the QoS requirements of the IP services intended to be accessed by the UE 102.

To modify an existing PDN connection between the UE 102 and the second cellular network 164 via the ePDG 116, the UE 102 (*e.g.,* SM controller 208) or the first CN 112 (*e.g.,* MME 115, PCRF 121) can initiate 318B a bearer resource modification procedure pursuant to 3GPP TS 24.301 to support the IP services to be delivered via ePDG 116. To established a new PDN connection, the UE 102 (*e.g.,* SM controller 208) can initiate 320B a bearer resource allocation procedure pursuant to 3GPP TS 24.301 to establish a new PDN connection with the first CN 112 (*e.g.,* MME 115, PCRF 121). In some implementations, in either of these procedures, the UE 102 (*e.g.,* SM controller 208) can transmit a request message (*e.g*., Bearer Resource Modification Request message, Bearer Resource Allocation Request message) to the first CN 112, which in turn modifies or otherwise establishes resources requested by the UE 102. More generally, either procedure can include any suitable messaging and processing at the UE 102 and/or the first CN 112 that causes the first CN 112 to establish a PDN connection over ePDG 116 that satisfies QoS requirements for IP services accessible by the UE 102. The base station 104 then can transmit an RRC Configuration message configuring a DRB for the PDN connection to the UE 102.

After successfully performing the bearer resource establishment procedure and/or bearer resource modification procedure, the UE 102 establishes 322B connectivity with the ePDG 116 of the second CN 114 via 3GPP access of the first CN 112. As a result, the base station 104 can generate a DRB configuration configuring DRB(s) and configure radio resources so that the UE 102 can transmit and receive packets of an IMS call (*e.g.,* via Internet application 222). After configuring the radio resources, the UE 102 (*e.g.,* IMS controller 206) can transmit IMS signaling messages (*e.g*., SIP messages) with the IMS 152 (*e.g.,* P-CSCF 118) via the second CN 114 using the established PDN connection, and receive the SIP "200 OK" message from the IMS 152 in response, thereby establishing an IMS call via the base station 104.

Although Figs. 3A and 3B each depict CN 112 and CN 114 as the same type of core network (*i.e.*, 5GC and EPC, respectively), the CN 112 and CN 114 need not be the same type. For example, in a scenario similar to scenario 300A and 300B, CN 112 can be a 5GC, and CN 114 can be an EPC, or alternatively, CN 112 can be an EPC, and CN 114 can be a 5GC.

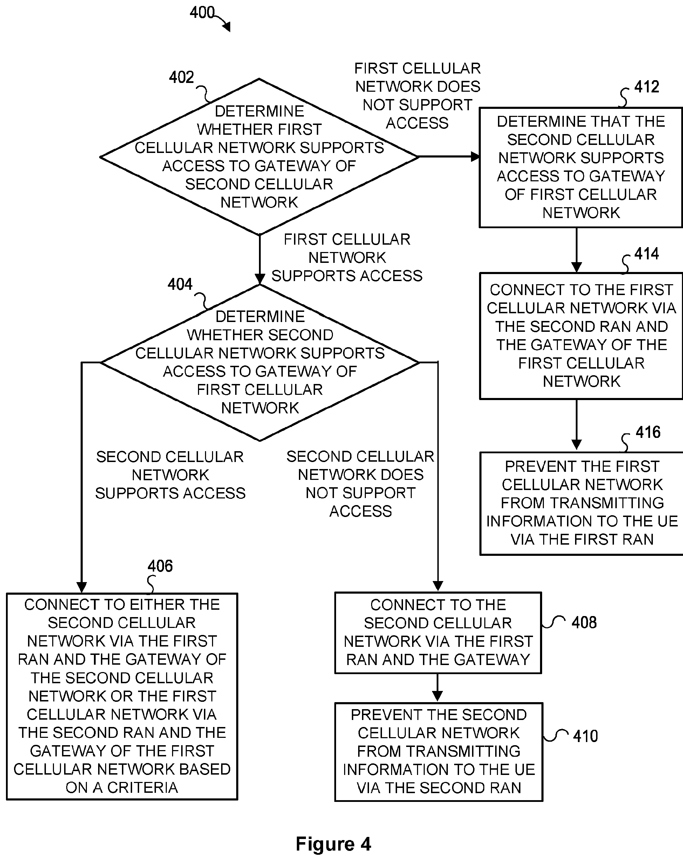

Fig. 4 is a flow diagram depicting an example method 400 in the UE (*e.g.,* UE 102) for connecting to a second cellular network (*e.g*., second cellular network 164) via its gateway (*e.g.,* ePDG 116) and a first RAN (*e.g.,* base station 104) of a first cellular network (*e.g.,* first cellular network 162), without connecting to the second cellular network over a second RAN (*e.g.,* base station 106) of the second cellular network.

At block 402, a UE determines whether the first cellular network supports access to a gateway of the second cellular network (*e.g*., in any one of events 302A, 302B, 304A, 304B). The UE can query the first cellular network to make such a determination, or receive an indication whether the first cellular network supports access to the gateway of the second cellular network in an SIB, for example. If at block 402 the UE determines that the first cellular network supports the access to the gateway of the second cellular network, the UE at block 404 can also determine whether the second cellular network supports access to a gateway of the first cellular network (*e.g*., in any one of events 306A, 306B, 308A, 308B). The UE can similarly query the second cellular network to make such a determination, or receive an indication whether the second cellular network supports access to the gateway of the first cellular network in an SIB, for example.

If at block 404 the UE determines that the second cellular network also supports access to the gateway of the first cellular network, the UE at block 406 can connect to either the second cellular network via the first RAN of the first cellular network and the gateway of the second cellular network, or the first cellular network via the second RAN and the gateway of the first cellular network based on a criteria. For example, the UE can perform measurements to obtain a RSRP or RSRQ between the UE and each of the first RAN and the second RAN, and select the cellular network corresponding to the RAN that exhibits a higher RSRP or RSRQ. However, if at block 404 the UE determines that the second cellular network does not support access to the gateway of the first cellular network, the UE at block 408 can connect to the second cellular network via the first RAN and the gateway of the second cellular network (*e.g*., in any one of events 322A, 322B). The connection to the second cellular network can satisfy QoS requirements associated with the services offered by the second cellular network, so that services that have stringing QoS requirements, such as IMS voice, can be supported over the connection. The UE at block 410 can also prevent the second cellular network from transmitting information to the UE via the second RAN (*e.g.,* in any one of events 312A, 312B). In this way, the UE can prevent the second cellular network from unnecessarily expending resources to page the UE via the second RAN, or otherwise incorrectly determining that the UE is unreachable, for example.

If at block 402 the UE determines that the first cellular network does not support the access to the gateway of the second cellular network, the UE at block 412 may determine whether the second cellular network supports access to a gateway of the first cellular network, *e.g*., by querying the second cellular network or receiving an indication, from the second cellular network, whether the second cellular network supports access to a gateway of the first cellular network. When the UE determines that the second cellular network supports access to the gateway of the first cellular network, the UE at block 414 can connect to the first cellular network via the second RAN and the gateway of the first cellular network, similar to the manner in which the UE at block 408 can connect to the second cellular network. The UE at block 416 can also prevent the first cellular network from transmitting information to the UE via the first RAN, similar to the manner in which the UE at block 410 prevents the second cellular network from transmitting information to the UE via the second RAN.

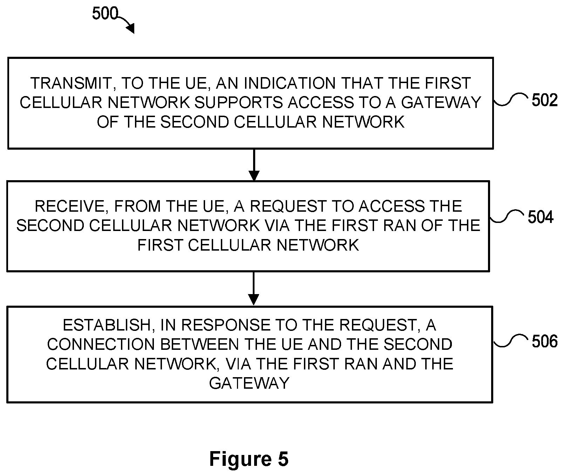

Fig. 5 is a flow diagram depicting an example method 500 in a first cellular network (*e.g.,* first cellular network 162) including a first RAN (*e.g.,* base station 104) for providing communication to a UE (*e.g.,* UE 102).

At block 502, a first cellular network transmits, to the UE, an indication that the first cellular network supports access to a gateway of a second cellular network, such as second cellular network 164 (*e.g.,* in any one of events 304A, 304B).

At block 504, the first cellular network receives, from the UE, a request to access the second cellular network via the first RAN of the first cellular network (*e.g*., in any one of events 314A, 314B). In this way, the first cellular network can be put on notice that the UE is requesting to connect to the second cellular network, and exercise control over granting whether the UE can connect to the gateway of the second cellular network.

At block 506, in response to the message, the first cellular network establishes, in response to the request, a connection between the UE and the second cellular network, via the first RAN and the gateway (*e.g*., in any one of events 322A, 322B).

The following additional considerations apply to the foregoing discussion.

A user device in which the techniques of this disclosure can be implemented (*e.g*., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (*e.g*., code stored on non-transitory machine-readable medium) or hardware modules. A hardware module is a tangible unit capable of performing certain operations and may be configured or arranged in a certain manner. A hardware module can comprise dedicated circuitry or logic that is permanently configured (*e.g*., as a special-purpose processor, such as a field programmable gate array (FPGA) or an application-specific integrated circuit (ASIC)) to perform certain operations. A hardware module may also comprise programmable logic or circuitry (*e.g*., as encompassed within a general-purpose processor or other programmable processor) that is temporarily configured by software to perform certain operations. The decision to implement a hardware module in dedicated and permanently configured circuitry, or in temporarily configured circuitry (*e.g*., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

Upon reading this disclosure, those of skill in the art will appreciate still additional alternative structural and functional designs for support packet-based voice and video calls through the disclosed principles herein. Thus, while particular embodiments and applications have been illustrated and described, it is to be understood that the disclosed embodiments are not limited to the precise construction and components disclosed herein. Various modifications, changes and variations, which will be apparent to those of ordinary skill in the art, may be made in the arrangement, operation and details of the method and apparatus disclosed herein without departing from the scope defined in the appended claims.

## Claims

1. A method in a user device (UE) equipped with a first universal subscriber identity module (USIM) for communicating with a first cellular network and a second USIM for communicating with a second cellular network, wherein the first cellular network includes a first radio access network (RAN) and the second cellular network includes a second RAN, the method comprising:
determining, by processing hardware of the UE, that the first cellular network supports access to a gateway of the second cellular network and that the second cellular network does not support access to a gateway of the first cellular network; and following the determining:
connecting to the second cellular network via the first RAN and the gateway; and
preventing the second cellular network from transmitting information to the UE via the second RAN.

2. The method of claim 1, wherein the determining includes one of:
(i) receiving, from the first cellular network, an indication of whether the first cellular network supports access to the gateway of the second cellular network;
(ii) transmitting, by the processing hardware, a query to the first cellular network or the second cellular network; and receiving an indication that the first cellular network supports access to the gateway in response to the query; and
(iii) receiving, from the first cellular network during a registration procedure, an indication of whether the first cellular network supports access to the gateway of the second cellular network.

3. The method of claim 1, further comprising:
receiving, from the first cellular network, an indication of one or more public land mobile networks (PLMNs) the first cellular network can access via a respective gateway;
wherein the determining is based at least in part on whether the second cellular network is associated with the one or more PLMNs.

4. The method of claim 3, wherein the received indication specifies one of:
only a PLMN of the first cellular network;
one or more equivalent PLMNs (E-PLMNs);
all PLMNs; and
a list of two or more PLMNs.

5. The method of any one of claims 1-4, wherein the connecting to the second cellular network includes:
transmitting, by the processing hardware via the first RAN, a request to access the gateway of the second cellular network.

6. The method of claim 5, wherein the request includes a quality of service (QoS) requirement for a data connection to the second cellular network.

7. The method of claim 5 or 6, wherein the request specifies one or more services for which the UE intends to use a data connection to the second cellular network.

8. The method of any one of claims 5-7, wherein transmitting the request includes:
transmitting the request in a message associated with mobility management at a non-access stratum (NAS) layer.

9. The method of any one of the preceding claims, wherein the connecting includes one of:
establishing a new session associated with a protocol for exchanging data packets, with the second cellular network via the gateway; and
modifying an existing session associated with a protocol for exchanging data packets, with the second cellular network via the gateway.

10. The method of any preceding claim, wherein the one or more criteria include one of:
respective signal metrics for the first RAN and the second RAN; and
a preference of the UE.

11. The method of any one of the preceding claims, wherein the preventing includes one of:
deregistering from the second RAN of the second cellular network; and
activating a Mobile Initiated Connection Only (MICO) mode with the second RAN of the second cellular network.

12. A user equipment (UE) comprising processing hardware configured to implement a method of any one of claims 1-11.

13. A method in a first cellular network including a first RAN for providing communication to a UE, the method comprising:
transmitting to the UE, by processing hardware of a first cellular network including a first RAN, an indication that the first cellular network supports access to a gateway of a second cellular network including a second RAN;
receiving, by the processing hardware from the UE, a request to access the second cellular network via the first RAN of the first cellular network based on the second cellular network not supporting access to the gateway of the first cellular network; and
establishing, by the processing hardware and in response to the request, a connection between the UE and the second cellular network, via the first RAN and the gateway of the second cellular network, causing the UE to (i) connect to the second cellular network via the first RAN and the gateway of the second cellular network and (ii) prevent the second cellular network from transmitting information to the UE via the second RAN.

14. A cellular network comprising processing hardware configured to implement a method of claim 14.

## Patentansprüche

1. Verfahren in einem Benutzergerät (UE), das mit einem ersten universellen Teilnehmeridentitätsmodul (USIM) zur Kommunikation mit einem ersten zellularen Netzwerk und einem zweiten USIM zur Kommunikation mit einem zweiten zellularen Netzwerk ausgestattet ist, wobei das erste zellulare Netzwerk ein erstes Funkzugangsnetzwerk (RAN) beinhaltet und das zweite zellulare Netzwerk ein zweites RAN beinhaltet, wobei das Verfahren umfasst:
Bestimmen durch Verarbeitungshardware des UE, dass das erste zellulare Netzwerk Zugriff auf ein Gateway des zweiten zellularen Netzwerks unterstützt und dass das zweite zellulare Netzwerk keinen Zugriff auf ein Gateway des ersten zellularen Netzwerks unterstützt; und nach dem Bestimmen:
Verbinden mit dem zweiten zellularen Netzwerk über das erste RAN und das Gateway; und
Verhindern, dass das zweite zellulare Netzwerk Informationen an das UE über das zweite RAN überträgt.

2. Verfahren nach Anspruch 1, wobei das Bestimmen eines von Folgendem beinhaltet:
(i) Empfangen einer Angabe, ob das erste zellulare Netzwerk Zugriff auf das Gateway des zweiten zellularen Netzwerks unterstützt, von dem ersten zellularen Netzwerk;
(ii) Übertragen einer Abfrage durch die Verarbeitungshardware an das erste zellulare Netzwerk oder das zweite zellulare Netzwerk; und Empfangen einer Angabe, dass das erste zellulare Netzwerk Zugriff auf das Gateway unterstützt, als Antwort auf die Abfrage; und
(iii) Empfangen einer Angabe, ob das erste zellulare Netzwerk Zugriff auf das Gateway des zweiten zellularen Netzwerks unterstützt, von dem ersten zellularen Netzwerk während eines Registrierungsverfahrens.

3. Verfahren nach Anspruch 1, ferner umfassend:
Empfangen einer Angabe über ein oder mehrere öffentliche landgestützte Mobilfunknetze (PLMNs), auf die das erste zellulare Netzwerk über ein jeweiliges Gateway zugreifen kann, von dem ersten zellularen Netzwerk;
wobei das Bestimmen zumindest teilweise darauf basiert, ob das zweite zellulare Netzwerk mit dem einen oder den mehreren PLMNs assoziiert ist.

4. Verfahren nach Anspruch 3, wobei die empfangene Angabe eines von Folgendem spezifiziert:
nur ein PLMN des ersten zellularen Netzwerks;
ein oder mehrere äquivalente PLMNs (E-PLMNs);
alle PLMNs; und
eine Liste von zwei oder mehr PLMNs.

5. Verfahren nach einem der Ansprüche 1 bis 4, wobei das Verbinden mit dem zweiten zellularen Netzwerk Folgendes beinhaltet:
Übertragen einer Anforderung zum Zugriff auf das Gateway des zweiten zellularen Netzwerks durch die Verarbeitungshardware über das erste RAN.

6. Verfahren nach Anspruch 5, wobei die Anforderung eine Dienstgüteanforderung (QoS) für eine Datenverbindung zum zweiten zellularen Netzwerk beinhaltet.

7. Verfahren nach Anspruch 5 oder 6, wobei die Anforderung einen oder mehrere Dienste spezifiziert, für die das UE beabsichtigt, eine Datenverbindung zum zweiten zellularen Netzwerk zu verwenden.

8. Verfahren nach einem der Ansprüche 5 bis 7, wobei das Übertragen der Anforderung Folgendes beinhaltet:
Übertragen der Anforderung in einer Nachricht, die mit Mobilitätsverwaltung an einer Nicht-Zugriffsschicht (NAS) assoziiert ist.

9. Verfahren nach einem der vorhergehenden Ansprüche, wobei das Verbinden eines von Folgendem beinhaltet:
Herstellen einer neuen Sitzung, die mit einem Protokoll zum Austauschen von Datenpaketen assoziiert ist, mit dem zweiten zellularen Netzwerk über das Gateway; und
Modifizieren einer bestehenden Sitzung, die mit einem Protokoll zum Austauschen von Datenpaketen assoziiert ist, mit dem zweiten zellularen Netzwerk über das Gateway.

10. Verfahren nach einem vorhergehenden Anspruch, wobei das eine oder die mehreren Kriterien eines von Folgendem beinhalten:
jeweilige Signalmetriken für das erste RAN und das zweite RAN; und
eine Präferenz des UE.

11. Verfahren nach einem der vorhergehenden Ansprüche, wobei das Verhindern eines von Folgendem beinhaltet:
Abmelden vom zweiten RAN des zweiten zellularen Netzwerks; und
Aktivieren eines Mobile-Initiated-Connection-Only-(MICO-)Modus mit dem zweiten RAN des zweiten zellularen Netzwerks.

12. Benutzergerät (UE), umfassend Verarbeitungshardware, die zum Implementieren eines Verfahrens nach einem der Ansprüche 1 bis 11 konfiguriert ist.

13. Verfahren in einem ersten zellularen Netzwerk, beinhaltend ein erstes RAN, zum Bereitstellen von Kommunikation an ein UE, wobei das Verfahren Folgendes umfasst:
Übertragen einer Angabe, dass das erste zellulare Netzwerk Zugriff auf ein Gateway eines zweiten zellularen Netzwerks, beinhaltend ein zweites RAN, unterstützt, an das UE durch Verarbeitungshardware eines ersten zellularen Netzwerks, beinhaltend ein erstes RAN;
Empfangen einer Anforderung zum Zugreifen auf das zweite zellulare Netzwerk über das erste RAN des ersten zellularen Netzwerks basierend darauf, dass das zweite zellulare Netzwerk keinen Zugriff auf das Gateway des ersten zellularen Netzwerks unterstützt, durch die Verarbeitungshardware von dem UE; und
Herstellen einer Verbindung zwischen dem UE und dem zweiten zellularen Netzwerk über das erste RAN und das Gateway des zweiten zellularen Netzwerks durch die Verarbeitungshardware und als Antwort auf die Anforderung, wodurch veranlasst wird, dass das UE (i) sich mit dem zweiten zellularen Netzwerk über das erste RAN und das Gateway des zweiten zellularen Netzwerks verbindet und (ii) verhindert, dass das zweite zellulare Netzwerk Informationen an das UE über das zweite RAN überträgt.

14. Zellulares Netzwerk, umfassend Verarbeitungshardware, die zum Implementieren eines Verfahrens nach Anspruch 14 konfiguriert ist.

## Revendications

1. Procédé dans un dispositif utilisateur (UE) équipé d'un premier module d'identité d'abonné universel (USIM) pour communiquer avec un premier réseau cellulaire et d'un second USIM pour communiquer avec un second réseau cellulaire, dans lequel le premier réseau cellulaire comporte un premier réseau d'accès radio (RAN) et le second réseau cellulaire comporte un second RAN, le procédé comprenant :
la détermination, par du matériel de traitement de l'UE, du fait que le premier réseau cellulaire prend en charge l'accès à une passerelle du second réseau cellulaire et que le second réseau cellulaire ne prend pas en charge l'accès à une passerelle du premier réseau cellulaire ; et suite à la détermination :
la connexion au second réseau cellulaire par l'intermédiaire du premier RAN et la passerelle ; et
le fait d'empêcher le second réseau cellulaire de transmettre des informations à l'UE par l'intermédiaire du second RAN.

2. Procédé selon la revendication 1, dans lequel la détermination comporte l'un :
(i) de la réception, en provenance du premier réseau cellulaire, d'une indication indiquant si le premier réseau cellulaire prend en charge l'accès à la passerelle du second réseau cellulaire ;
(ii) de la transmission, par le matériel de traitement, d'une requête au premier réseau cellulaire ou au second réseau cellulaire ; et de la réception d'une indication selon laquelle le premier réseau cellulaire prend en charge l'accès à la passerelle en réponse à la requête ; et
(iii) de la réception, en provenance du premier réseau cellulaire pendant une procédure d'enregistrement, d'une indication indiquant si le premier réseau cellulaire prend en charge l'accès à la passerelle du second réseau cellulaire.

3. Procédé selon la revendication 1, comprenant également :
la réception, en provenance du premier réseau cellulaire, d'une indication d'un ou plusieurs réseaux mobiles terrestres publics (PLMN) selon laquelle le premier réseau cellulaire peut accéder par l'intermédiaire d'une passerelle respective ;
dans lequel la détermination est basée au moins en partie sur le fait que le second réseau cellulaire est associé aux un ou plusieurs PLMN.

4. Procédé selon la revendication 3, dans lequel l'indication reçue spécifie l'un de :
seulement un PLMN du premier réseau cellulaire ;
un ou plusieurs PLMN équivalents (E-PLMN) ;
tous les PLMN ; et
une liste de deux PLMN ou plus.

5. Procédé selon l'une quelconque des revendications 1 à 4, dans lequel la connexion au second réseau cellulaire comporte :
la transmission, par le matériel de traitement par l'intermédiaire du premier RAN, d'une demande d'accès à la passerelle du second réseau cellulaire.

6. Procédé selon la revendication 5, dans lequel la demande comporte une exigence de qualité de service (QoS) pour une connexion de données au second réseau cellulaire.

7. Procédé selon la revendication 5 ou 6, dans lequel la demande spécifie un ou plusieurs services pour lesquels l'UE a l'intention d'utiliser une connexion de données au second réseau cellulaire.

8. Procédé selon l'une quelconque des revendications 5 à 7, dans lequel la transmission de la demande comporte :
la transmission de la demande dans un message associé à la gestion de la mobilité au niveau d'une couche de non-accès (NAS).

9. Procédé selon l'une quelconque des revendications précédentes, dans lequel la connexion comporte l'un de :
l'établissement d'une nouvelle session associée à un protocole d'échange de paquets de données, avec le second réseau cellulaire par l'intermédiaire de la passerelle ; et
la modification d'une session existante associée à un protocole d'échange de paquets de données, avec le second réseau cellulaire par l'intermédiaire de la passerelle.

10. Procédé selon une quelconque revendication précédente, dans lequel les un ou plusieurs critères comportent l'une de :
métriques de signal respectives pour le premier RAN et le second RAN ; et
une préférence de l'UE.

11. Procédé selon l'une quelconque des revendications précédentes, dans lequel la prévention comporte l'une de :
la désinscription du second RAN du second réseau cellulaire ; et
l'activation d'un mode Mobile Initiated Connection Only (MICO) avec le second RAN du second réseau cellulaire.

12. Équipement utilisateur (UE) comprenant du matériel de traitement configuré pour mettre en œuvre un procédé selon l'une quelconque des revendications 1à 11.

13. Procédé dans un premier réseau cellulaire comportant un premier RAN pour fournir une communication à un UE, le procédé comprenant :
la transmission à l'UE, par du matériel de traitement d'un premier réseau cellulaire comportant un premier RAN, d'une indication selon laquelle le premier réseau cellulaire prend en charge l'accès à une passerelle d'un second réseau cellulaire comportant un second RAN ;
la réception, par le matériel de traitement de l'UE, d'une demande d'accès au second réseau cellulaire par l'intermédiaire du premier RAN du premier réseau cellulaire sur la base du fait que le second réseau cellulaire ne prend en charge l'accès à la passerelle du premier réseau cellulaire ; et
l'établissement, par le matériel de traitement et en réponse à la demande, d'une connexion entre l'UE et le second réseau cellulaire, par l'intermédiaire du premier RAN et la passerelle du second réseau cellulaire, amenant l'UE à (i) se connecter au second réseau cellulaire par l'intermédiaire du premier RAN et la passerelle du second réseau cellulaire et (ii) empêcher le second réseau cellulaire de transmettre des informations à l'UE par l'intermédiaire du second RAN.

14. Réseau cellulaire comprenant du matériel de traitement configuré pour mettre en œuvre un procédé selon la revendication 14.
